# EUROPEAN PATENT APPLICATION

(11) **EP 1 014 664 A2**
(43) Date of publication of application: **28.06.2000**
(21) Application number: 99310212.8
(22) Date of filing: 17.12.1999
(51) Int. Cl.: H04M 3/537, H04M 3/533

(54) **Remote notification of receipt of a signal and its source**

(30) Priority: 23.12.1998 US 220074
(71) Applicant: Nortel Networks Corporation, Montreal, Quebec H2Y 3Y4 (CA)
(72) Inventor: Freestone, Jerry Allan, Calgary, Alberta T2A 6E1 (CA); Manning, Kenton, Calgary, Alberta T2P 3P1 (CA); Buckler, Btian Lawrence, Calgary, Alberta T3A 0K6 (CA); Vizer, Raymond Jay, Calgary, Alberta T3A 0K6 (CA); Iun, Vai Hou, Calgary, Alberta T3G 3T7 (CA)
(74) Representative: Maury, Richard Philip

(57) **Abstract**

A method and apparatus for remote notification of a signal and its source are disclosed. The method involves receiving an information signal at a first device, determining a source of the information signal, establishing communications between the first device and a second device and transmitting from the first device to the second device, a signal identifying the source of the information signal.

## Description

### BACKGROUND OF THE INVENTION

### 1. Field of the Invention

This invention relates to remote notification of receipt of a signal and its source and more particularly, to remote notification of the source of an information signal, which may be a telephone call, or email for example, at a remote device.

### 2. Description of Related Art

With the increasing mobility of communications services users, many users employ voice messaging services or answering machines, or email messaging services, to receive messages while the user is mobile. Typically, the user is required to contact a messaging platform or activate a playback function of an answering machine from a remote location in order to retrieve messages. Constant querying on the part of the user is required for the user to be advised of his messages. Such constant querying can be disruptive to the user as the user must be reminded to call for messages.

When a user is in a single remote location, current technology permits him to program his telephone to forward calls to him at the remote location. If the user frequently receives many calls this may be undesirable as some calls may not be of particular importance and possibly bothersome. However, if the user is waiting for a very important call, he must still attend to each call until the desired call is received.

One way of dealing with this problem appears to be disclosed in US Pat No. 4,942,598 to Davis, in which voice messages are selectively forwarded to a remote location. However, some users would rather know that an important message or call has been received from a particular source and would prefer to take the message or call at a more suitable time, or when the user is better prepared to communicate. Thus there is no need to take the message or call at the remote location, but rather to know that a message or call from a particular source has been received. The present invention addresses this need.

### SUMMARY OF THE INVENTION

The present invention addresses the above need by providing remote notification of a signal and its source. In particular, an information signal, which may be a telephone call with calling line identification signals or signals providing email for example, is received at a first device which may be a telephone. The first device determines the source of the information signal, makes a connection to pre-specified remote equipment and transmits a signal indicating the source of the information signal to the remote equipment. If the information signal is a telephone call, the source may be determined from calling line identification information for example. If the information signal is an email, the source may be determined from a header thereof, for example. The remote equipment receives the signal indicating the source of the information signal received at the first device and takes action to notify a user. Such action may include transmitting a page message on a paging network or simply annunciating the identity of the source on a display, or by audible device, for example. Thus, the information signal itself need not be received at the remote equipment, rather, only an indication of the source of the information signal need be received.

In accordance with one aspect of the invention, there is provided a method of remote notification of a signal and its source. The method includes receiving at a first device an information signal, determining a source of the information signal, establishing communications between the first device and a second device, and transmitting from the first device to the second device, a signal identifying the source of the information signal.

The source may be determined from the information signal itself, possibly by extracting calling line identification information from the information signal where the information signal is a telephone call or from an email header, where the information signal is an email.

Preferably, communications between the first and second devices is established only when the source is a pre-specified source selected from a list of pre-specified sources. Optionally, telephone numbers or email addresses may be associated with different sources or the same source, for example.

In accordance with another aspect of the invention, there is provided an apparatus for providing remote notification of a signal and its source. The apparatus includes a receiver for receiving an information signal, a processor circuit for determining a source of the information signal, a communications interface for establishing communications with a second apparatus and a transmitter for transmitting to the second apparatus, a signal identifying the source of the information signal.

In accordance with another aspect of the invention, there is provided a system including the apparatus above and a paging service provider for transmitting a page message including the identification of the source.

In accordance with another aspect of the invention, there is provided a system including the apparatus above and a second apparatus having an annunciator such as a display, for annunciating the identity of the source.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

In drawings which illustrate embodiments of the invention,
- Figure **1**: is a schematic diagram of a system for remote notification of receipt of a signal and its source, according to a first embodiment of the invention;
- Figure **2**: is a block diagram of a first telephony device, according to the first embodiment of the invention;
- Figure **3**: is a schematic representation of a computer program architecture running on a system processor in the first telephony device shown in Figure **2**;
- Figure **4**: is a file system of the computer program architecture shown in Figure **3**;
- Figure **5**: is a block diagram of a central office interface of the first telephony device shown in Figure **2**;
- Figure **6**: is a representation of an Analog Display Services Interface (ADSI) message format of ADSI messages receivable by the first telephony device shown in Figure **2**;
- Figure **7**: is a representation of an email format for storage of email in an email directory of the file system shown in Figure **4**;
- Figure **8**: is a flowchart of a forward routine executed by the system processor of the first telephony device shown in Figure **2**;
- Figure **9**: is a flowchart of an optional selectivity function, optionally included in the forward routine shown in Figure **8**; and
- Figure **10**: is a schematic representation of a selectivity table used by the optional selectivity function shown in Figure **9**.

### DETAILED DESCRIPTION

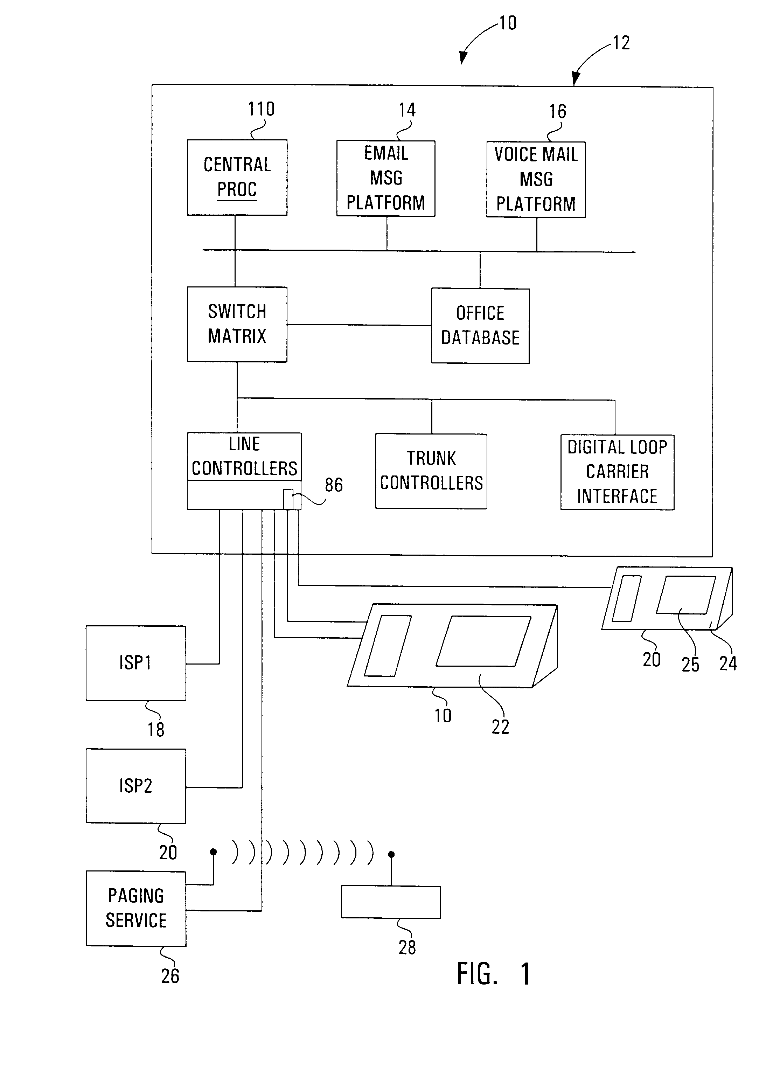

Referring to Figure **1**, a system in which remote notification of a signal and its source is provided, is shown generally at **10**. Effectively, the system includes a central office **12**, which may include an email messaging platform **14** and/or a voicemail messaging platform **16** internally, or which may have external email and voice mail platforms. The system may also include first and second internet services providers **18** and **20**, for example, which may provide external email messaging services.

Further connected to the central office is a first telephony device **22**, a second telephony device **24**, and a paging service **26**.

The first telephony device **22** is, in this embodiment, a web telephone which is capable of receiving voice calls, receiving calling line identification (CLID) information, communicating directly with internet services providers **18** and **20** and receiving Analog Display Services Interface (ADSI) and/or Multi-Data Multifrequency (MDMF) messages from the central office **12** indicative of messages received at the email messaging platform **14** or the voicemail messaging platform **16**.

In essence, the first telephony device **22** is capable of receiving an information signal indicating the presence of email at one of the Internet services providers, a waiting email message at the email messaging platform **14**, a waiting voice mail message at the voicemail messaging platform **16** or a telephone call including calling line identification (CLID) information.

In response to receiving such an information signal, the first telephony device **22** determines the source of the information signal and establishes communications with a second device. In the case of a telephone call, the source may be determined from CLID information or Automatic Number Identification (ANI) in an Integrated Services Digital Network (ISDN) for example. In the case of an email, the source may be determined from a source header thereof, for example. In the case of an ADSI or MDMF message indicating a waiting message at a voicemail or email platform, the source may be determined from a predefined portion of a data field thereof.

The establishment of communications with the second device may be achieved by placing a telephone call to the second device which in this embodiment, may be the paging service **26**, the second telephony device **24** or one of the internet services providers **18** or **20**, for example. Alternatively, a direct connection may be established with one of the internet services providers **18** or **20**. The first telephony device **22** then transmits to the second device, a signal identifying the source of the information signal. The second device then performs the necessary functions to notify the user of the source.

In the above manner, a user of the first telephony device **22** is notified of email and its source, email or voice messages and the source of such messages, or is notified of incoming calls and their sources. Such notification may be provided at a remote device such as, in this embodiment, the second telephony device **24**, remote pager **28**, or internet services provider **18** or **20**, for example. Thus, in general, the user is remotely informed of having received an information signal and the source of such signal.

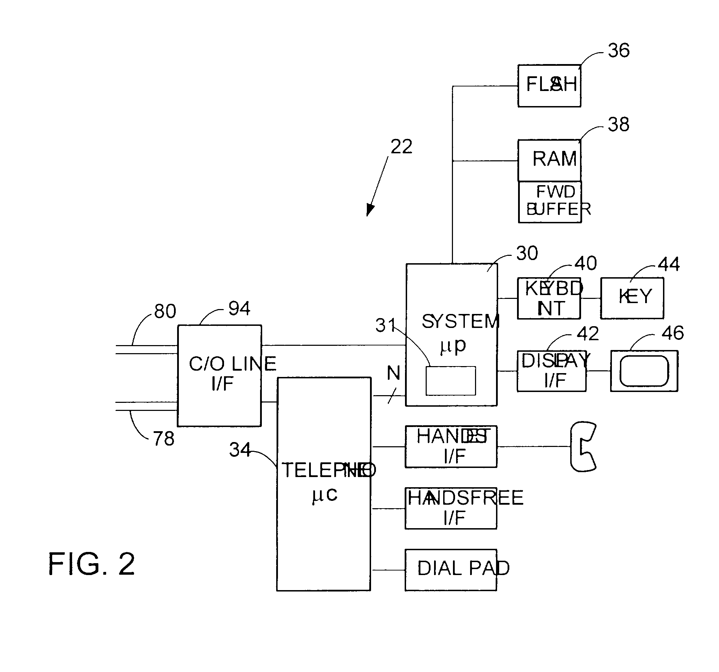

To facilitate this remote notification of an information signal and its source, the first telephony device **22** is provided with communications capability as explained beginning with Figure **2**, in which a block diagram of the first telephony device is shown generally at **22**.

The first telephony device **22** includes a processor circuit **30** connected to a telephony interface, which in this embodiment, includes a central office line interface **32** and a telephony microcontroller **34.** The processor circuit **30** is further in communication with FLASH memory **36**, Random Access Memory (RAM) **38**, a keyboard interface **40** and a display interface **42**. The keyboard interface **40** is in communication with a keyboard **44** and the display interface **42** is in communication with a display **46**.

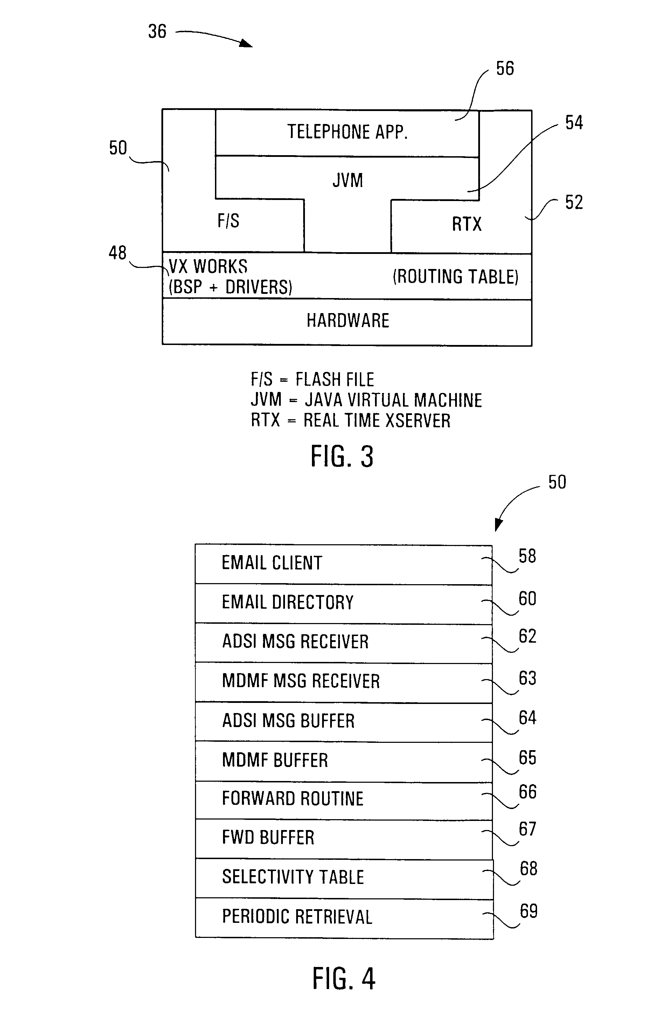

Referring to Figures **2** and **3**, the FLASH memory **36** is loaded with codes for directing the processor circuit **30** to execute various functions. Such codes include a low level operating system shown generally at **48**, a file system shown generally at **50**, a real time operating system shown generally at **52**, a JAVA virtual machine shown generally at **54** and telephone application software shown generally at **56**.

In this embodiment, the !ow level operating system is VX Works and the real time operating system is RTX. The file system is shown in greater detail at **50** in Figure **4** and includes an email client program **58**, an email directory **60**, an Analog Display Services Interface (ADSI) message receiver **62**, an ADSI message buffer **64**, an MDMF message receiver **63**, an MDMF buffer **65** a forward routine **66** and a selectivity table **68**.

The email client **58** may be any email client capable of interacting with the central office line interface **32** to upload and download an email to or from an ISP or email messaging platform from or to the email directory **60**.

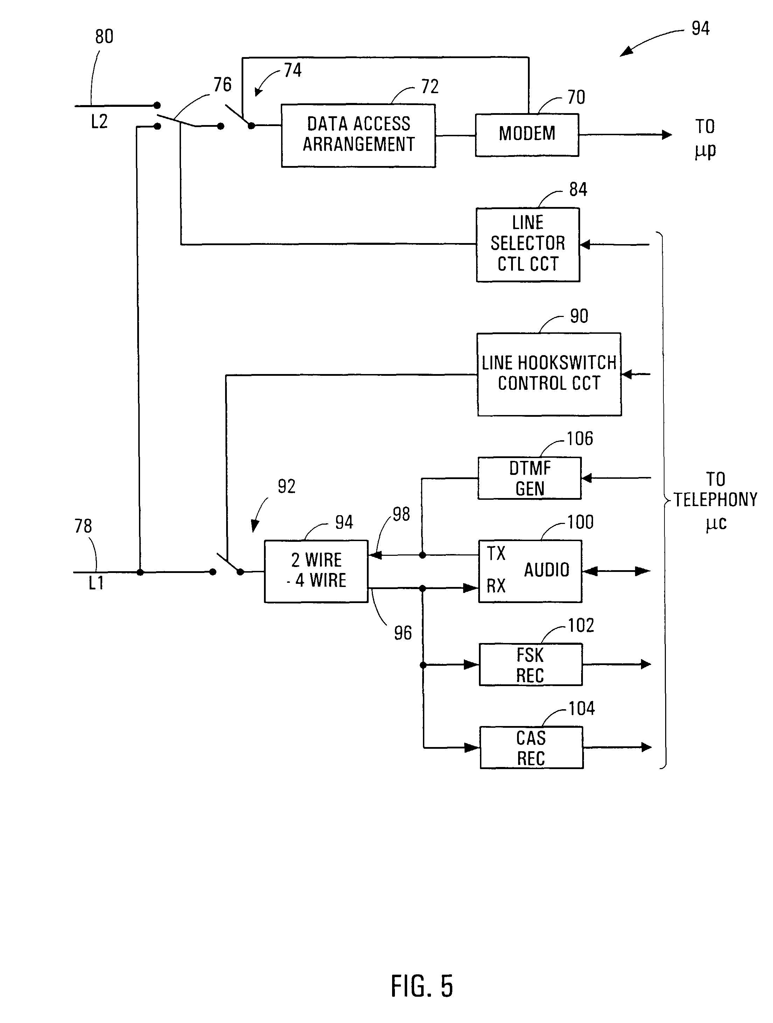

Referring to Figure **5**, to facilitate such interaction, the central office line interface **32** includes a modem **70** which is connected directly to and controlled by the processor circuit **30** shown in Figure **2**.

Referring back to Figure **5**, the modem **70** is connected to a data access arrangement **72** which is connected to a hookswitch **74**. Opening and closing of the hookswitch **74** is controlled by the modem **70** under the control of the processor circuit **30**.

The hookswitch **74** is further connected to a line selector switch **76** for selecting between first and second telephone lines **78** and **80** respectively. A line selector circuit **84** controlled by the telephony microcontroller **34** controls which of the lines is to be used by the data access arrangement **72.** Thus, to cause the telephony microcontroller **34** to select a particular line, the processor circuit **30** communicates with the telephony microcontroller **34** to cause the line selector circuit **84** to select an appropriate line. Effectively, whichever line is not in use, with preference to the second line **80**, will be selected. It will be appreciated that the line selector is desirable where the telephone has one or more telephone lines connected to the central office. Alternatively however, it will be appreciated that a single telephone line may be used such that incoming information signals are received on the telephone line and after such signals are received and terminated, the telephony device seizes the telephone line to effect remote notification.

Regardless of the number of telephone lines connected to the first telephony device **22**, the email client **58** shown in Figure **4** cooperates with the modem and data access arrangement shown in Figure **5**, to establish a connection to one of the internet services providers **18** or **20** shown in Figure **1**. This may be done on a periodic basis, for example. The email client then uses an appropriate protocol such as the post office protocol (POP**3**), the Internet message access protocol (IMAP), or the Simple Mail Transfer Protocol (SMTP), for example, to load an email from the Internet services provider into the email directory **60**.

Alternatively, an email may be received in an ADSI or MDMF message in ADSI data messaging format (ADMF) or MDMF format on the first telephone line **78** shown in Figure **5**. To facilitate this, referring back to Figure **1**, the email messaging platform **14** may receive an email using standard protocols, from one of the internet services providers **18** or **20** and store such email locally within the central office. The email messaging platform **14** then communicates with a central processor **86** of the central office to produce an ADMF or MDMF message at a line controller **112** to which the first telephone line **78** is connected.

Information signals representing ADSI or MDMF messages are produced in an FSK signalling format at a line controller **112** connected to the first telephony device **22**. In this manner, ADSI or MDMF messages, including at least headers of the email at the email messaging platform **14,** are communicated to the first telephony device **22**.

To facilitate receipt of such messages, the central office line interface shown in Figure **5** includes a line hookswitch control circuit **90** for controlling a line hookswitch **92** connected to the first telephone line **78.** The line hookswitch **92** is connected to a two-to-four wire hybrid **94** which has a receive output **96** and a transmit input **98**. The receive output is connected to a receive input of an audio circuit **100** and is further connected to a frequency shift keyed (FSK) receiver **102** and a caller alerting signal (CAS) receiver **104.** The audio circuit **100**, FSK receiver **102** and CAS receiver **104** are connected to the telephony microcontroller **34.** The telephony microcontroller **34** is also connected to a DTMF generator **106** which is connected to the transmit input **98** of the two-to-four wire hybrid **94**.

FSK signals representing ADSI or MDMF messages are received at the FSK receiver **102** and provided to the telephony microcontroller. The processor circuit **30** runs the ADSI message receiver **62** or MDMF message receiver shown in Figure **4**, upon receipt of a CAS signal at the CAS receiver **104**. The mechanism for receiving ADSI or MDMF messages at a telephone is well known and, therefore, the functioning of the ADSI message receiver **62** would be well known to one of ordinary skill in the art.

Effectively, the ADSI message receiver **62** deposits in the ADSI message buffer **64,** an ADSI message containing at least a portion of an email. Alternatively, the MDMF message receiver **63** deposits in the MDMF buffer **65** an MDMF message containing at least a portion of an email.

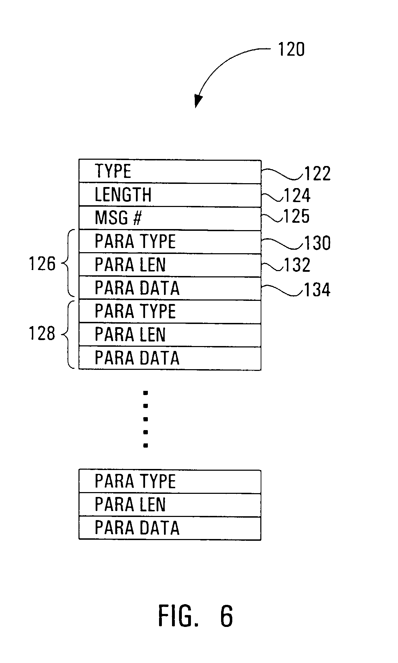

Referring to Figure **6**, ADSI or MDMF messages containing at least a portion of an email, have a structure shown at **120** in Figure **6**.

As is known by those knowledgeable of ADSI and MDMF messages, ADSI messages have a type field **122**, a length field **124**, a message number filed **125** and a plurality of data units, two of which are shown at **126** and **128**. Each data unit includes a parameter type field **130**, a parameter length field **132** and a parameter data field **134**. MDMF messages have a similar format, without the message number field **125**.

In order to facilitate the transfer of email or email headers using ADSI or MDMF messages, a unique parameter type identifying the contents of the parameter data field **134** as email data is stored in the parameter type field **130** by the central processor **110** at the central office.

The parameter data field **134** holds bytes representing data comprising the email or email headers. In the case of a very short email, there may only be one data unit **126.** Alternatively, a plurality of emails may be transmitted in respective data units **126, 128**, etc., or portions of an email or header may be associated with respective data units **126, 128**, etc.

Upon receipt of an ADSI or MDMF message containing email or a portion thereof, the contents of the parameter data field **134** of each data unit **126, 128**, etc., are pieced together to reconstruct (if necessary), the entire email into a form in which it would have been received if it were retrieved directly from one of the internet services providers **18** or **20** shown in Figure **1**. The reconstructed email is stored in the email directory **60**. Thus, in effect, all email, whether received directly from an internet services provider or whether received in an ADSI or MDMF message, is stored in the email directory complete.

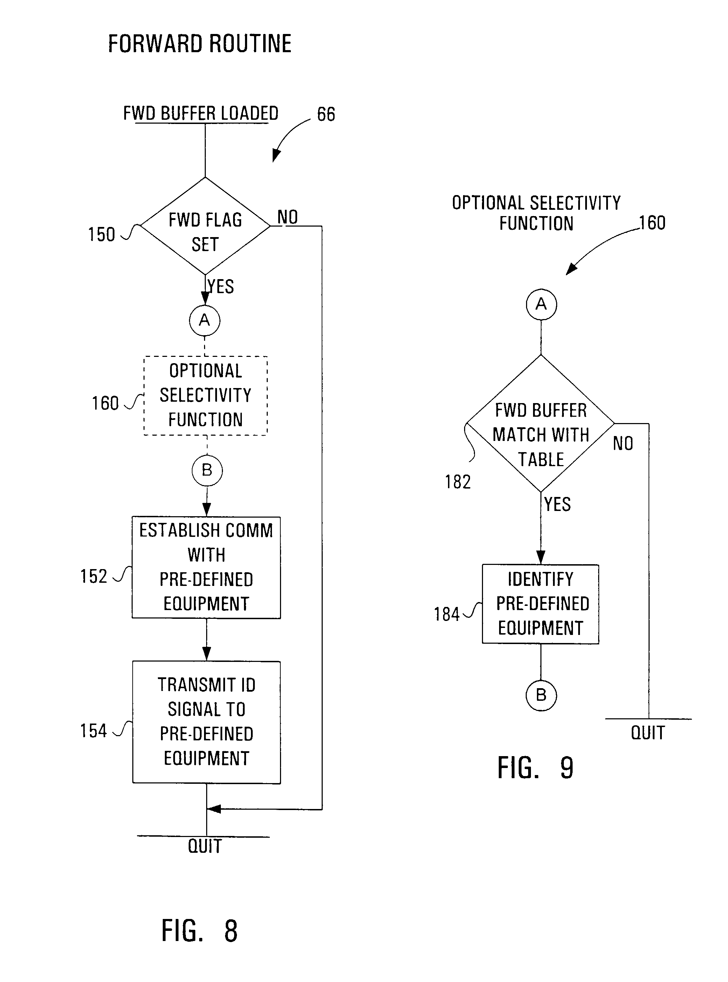

Referring to Figure **7**, email has a format as shown generally at **140**. Such format includes a plurality of headers **142** and a message body **144.** This format is in accordance with the standard for The Format of ARPA Internet Text Messages as specified in RFC **822** dated August **13**, **1982**. In general, the headers **142** and message body **144** define the content of an email. As seen in Figure **7**, the headers include FROM and SENDER headers, the FROM header identifying the equipment or source from which the email was sent and the SENDER header identifying the person who wrote the email. The FROM and SENDER headers may separately or together be considered the source of the email.

Alternatively, messages providing notification of email or voice messages from the email messaging platform **14** or the voice mail messaging platform **16**, are formatted at the central office and transmitted to the first telephony device **22** using FSK signals modulated in an MDMF format in a manner similar to that in which calling line identification information is provided conventionally. However, at least one field of the MDMF message so produced contains an indication of the type of message i.e., email or voice mail, and an indication of the source of the message as determined by the respective email messaging platform or voice mail messaging platform from headers or calling line identification information. Upon receipt of the MDMF message at the telephone, the message is received in the usual manner through the FSK receiver **102** which provides digital codes representing the message. The MDMF message is then stored in the MDMF buffer **65**. Thus, the MDMF buffer stores codes which identify the source of an email or voice mail message received at the email messaging platform **14** or the voice mail messaging platform **16**.

To receive notifications of voice messages from the voicemail messaging platform **16** shown in Figure **1**, the voicemail messaging platform **16** has the capability of recording calling line identification information associated with a caller leaving a voicemail message. Such calling line identification information is provided to the central processor **110** which produces an ADSI or MDMF message of the type shown in Figure **6** in which the parameter data field **134** is loaded with the calling line identification information. In this manner, calling line identification information is passed from the original party leaving the voice message, to the first telephony device **22**. Thus, an ADSI or MDMF message indicative of a voicemail message received at the voicemail messaging platform **16** includes an identification of the source of the message in the parameter data field **134**.

In the event that a telephone call is received at the first telephony device **22**, calling line identification information is received in the usual manner through the FSK receiver **102** which provides digital codes representing to calling line identification information signals received on the first telephone line **78**. Such codes produced by the FSK receiver **102** are stored by the processor circuit **30** in the MDMF buffer **65**. Thus, the MDMF buffer **65** stores codes which identify the source of the telephone call.

The signals which provide email from an internet services provider, the signals which provide ADSI messages or MDMF messages and the signals which provide calling line identification information are all examples of information signals received at the first telephony device **22**, the notification of which and their sources are provided remotely to the user. Thus, in the case of email from an internet services provider, the modem **70** acts as a receiver for receiving the information signal and in the case of the ADSI or MDMF messages, the FSK receiver **102** acts to receive the information signal.

From the foregoing, it should be readily appreciated that by reviewing the FROM or SENDER headers in an email in the email directory, by reading the contents of the parameter data field **134** in the ADSI message buffer **64** or by reading appropriate fields of the data stored in the MDMF buffer **65**, the source of the associated information signal is readily determined. It will be appreciated that the "source" is not necessarily the equipment which transmits the information signal, but rather may be the person originating the information signal, particularly in the case where an email is the information signal. In other words, the processor is programmed to determine the source from the information signal itself. Thus, in the case of an MDMF message including calling line identification information, the processor is to extract calling line identification information from the information signal.

Upon receipt of an email, an ADSI message, MDMF message, or a telephone call, the email directory **60** or associated buffer **64** or **65** is read by the processor circuit **30** to determine the source of the information signal. Any code or codes identifying the source of the information signal is then copied by the processor circuit **30** to the forward buffer **67** shown in Figure **4**.

Upon receipt of a new source indication in the forward buffer **67**, the forward routine **66** is executed by the processor circuit **30**.

The forward routine is shown at **66** in Figure **8** and begins with a first block **150** which directs the processor circuit **30** to determine whether or not a forward flag (not shown) is set. The forward flag is set in response to input by the user to indicate that identifications of the sources of incoming information signals are to be forwarded to a remote device.

In the simplest form of the invention, the remote device to which the source information is to be communicated is fixed. For example, the remote device may be the paging service **26** shown in Figure **1**. In such case, the paging service **26** has a fixed telephone number and therefore after determining at block **150** that the forward flag has been set, block **152** directs the processor circuit **30** to cause the telephony microcontroller **34** to activate the line hookswitch control circuit **90** and DTMF generator **106** to cause the DTMF generator **106** to dial the predefined telephone number of the paging service **26** to establish communications therewith on the first telephone line **78.** Thus, the central office line interface **32** acts to place a telephone call to a second apparatus.

After establishing communications with the paging service **26** through a conventional telephone call, the contents of the forward buffer **67** are transferred to the modem **70** which controls the hookswitch **74** and additional signals are provided to the telephony microcontroller **34** to control the line selector circuit **84** to allow the modem **70** to communicate on the first telephone line **78**. The contents of the forward buffer **67** are then provided to the modem **70** which produces FSK signals representing the source of the information signal previously received. The FSK signals produced by the modem thus identify the source of the information signal received at the first telephony device **22**. The processor circuit **30** and modem **70** thus act as a transmitter for establishing communications with a second apparatus and for transmitting to the second apparatus a signal identifying the source of the information signal. For example, if the source of the information signal is a telephone call in which calling line identification signals identify the source, the transmitter transmits a signal including the calling line identification information.

The FSK signals are provided to the paging service **26** in accordance with the Telocator Alphanumeric Protocol (TAP). In turn, the paging service **26** transmits an appropriate page message indicative of the source of the information signal received at the first telephony device **22**, to a remote pager **28** for viewing by the user. In this manner, the user is provided with a display indicating the source of an information signal and the fact that such information signal has been received at the first telephony device **22**. More particularly, the user having the remote pager **28** is able to receive an indication that an information signal has been received at the first telephony device **22** and an indication of the source of such signal.

Alternatively, instead of dialling the telephone number of the paging service **26**, the DTMF generator **106** may be directed to dial the telephone number of the second telephony device **24** on the first telephone line **78** in which case the processor circuit **30** directs the modem **70** to transmit FSK signals in accordance with the Multiple Data Messaging Formal (MDMF) for receipt by the second telephony device **24**. The second telephony device **24** then interprets the FSK signals, as though they were transmitted directly from the central office **12** and extracts the source information therefrom, in the manner above. Such source information is then displayed on a display **25** at the second telephony device **24.** The display thus acts as an annunciator for annunciating an identification of the source. Alternatively, the first telephony device **22** may communicate the source of the information signal to the second telephony device **24** using an ADSI or MDMF messaging protocol as described above.

Alternatively, communications may be established with one of the internet services providers **18** or **20**, using conventional email client software for transmitting email according to the SMTP format or MIME format, for example. In this case, block **152** in Figure **8** directs the processor circuit **30** to establish a connection to one of the internet services providers **18** or **20**. Then an email message is formatted by the processor circuit **30** under the direction of the email client **58**, to produce an email, the body of which includes the indication of the source as determined by the contents of the forward buffer **67**. The email may be addressed to any pre-specified email address. The email is then transmitted through the modem **70** shown in Figure **5**, to the internet services provider **18** or **20**.

Preferably, the invention is enhanced by the use of an optional selectivity function shown generally at **160** in Figure **9**. Referring to Figures **8** and **9**, the optional selectivity function **160** is executed between blocks **150** and **152** of the forward routine shown in Figure **8**.

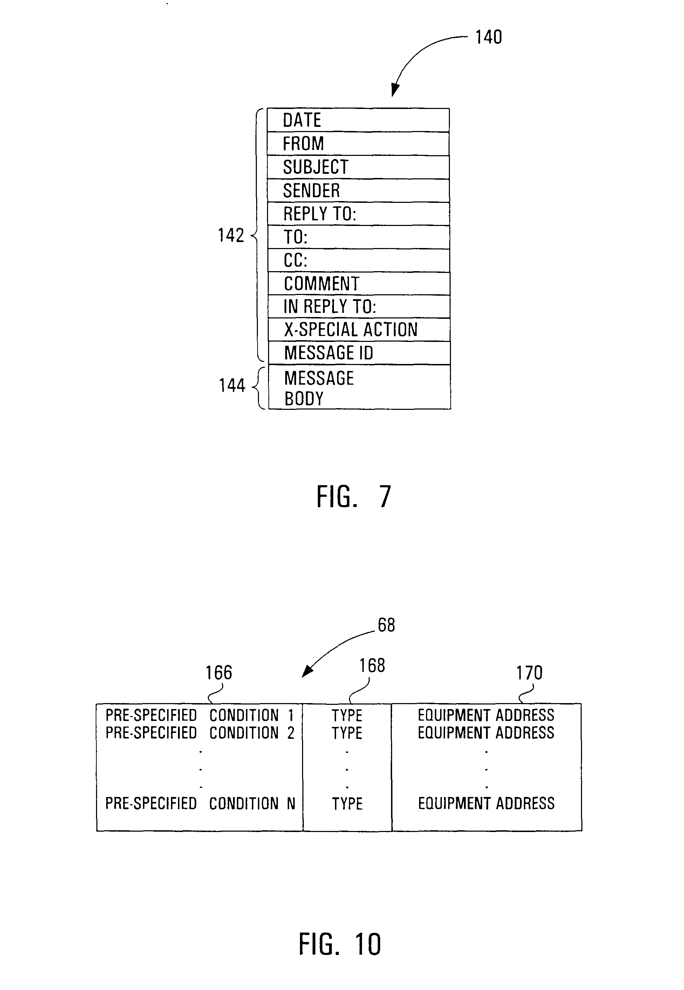

Referring to Figures **8, 9** and **10**, the optional selectivity function cooperates with the selectivity table **68** shown in Figure **10**. The selectivity table **68** includes a pre-specified condition field **166**, a type field **168** and an equipment address field **170**. The pre-specified condition field **166** is used to hold data defining a pre-specified condition under which the identification of the source is to be communicated to a second device. For example, the contents of this field may include source = WIFE in which case the signal identifying the source will only be sent when the contents of the forward buffer match the string "WIFE". In other words, the processor directs the telephony interface to place a telephone call only when the source is pre-specified source. Alternatively, the condition may be specified as source NOT EQUAL "WIFE", for example, in which case signals identifying the source of all information signals from everyone except WIFE will be forwarded to the second device.

The type field **168** holds a code identifying the type of equipment with which communications are to be established. For example, the type field may hold a code identifying the type of equipment as an email service provider, a paging service provider or a remote user telephony device, for example.

The equipment address field **170** is used to hold an equipment address where the corresponding type field **168** indicates that the communications are to be established with an Internet service provider or, a telephone number, where communications are to be established with the paging service **26** or the second telephony device **24.**

A plurality of pre-specified condition fields **166**, equipment type fields **168** and equipment address fields **170** may be included to allow communications to be successively established with different types of equipment, depending upon the particular pre-specified conditions which are met by the contents of the forward buffer **67.**

In addition to, or alternatively to, specifying conditions based on the contents of the forward buffer, the conditions may include other parameters such as time of day, for example. Hence, selective remote notification may occur only at certain times of day and only when a information signal is received from a pre-specified caller, for example. This may have benefits when used in a system having a call announce feature with a day/night alerting profile so that the night profile can be overridden only by pre-specified callers, for example.

Preferably, the processor circuit **30** is responsive to user input received at the keyboard **44** or dial pad shown in Figure **2** which act as user input devices to allow the user to specify pre-specified conditions to be stored in the pre-specified condition field **166**, the equipment type stored in the field **168** and the equipment address stored in the equipment address field **170.** Thus, the apparatus includes a user input device and the processing circuit is programmed to associate telephone numbers with pre-specified conditions in response to user input received at the user input device.

Thus, referring to Figures **8, 9** and **10**, after determining that the forward flag is set at block **150,** the processor circuit **30** is directed to block **182** which employs the selectivity table **68** shown in Figure **10** to determine whether or not any of the pre-specified conditions in the pre-specified condition field **166** have been satisfied. If no conditions have been satisfied, the forward routine is ended. Otherwise, for each condition which is satisfied the processor circuit **30** is directed to block **184** which causes it to read the contents of the corresponding type field **168** and equipment address field **170**, to determine the type and equipment address of the equipment with which communications are to be established.

Then, the processor circuit **30** is directed to blocks **152** and **154** to function as described above, to cause communications to be established with the equipment specified by the contents of the type field **168** and to cause the signal identifying the source of the information message to be transmitted thereto.

After establishing such communications, signals appropriate for receipt by the remote device are transmitted by the first telephony device **22** to the remote device for remote notification of an information signal and its source. The user is thus remotely advised of information signals received at the first telephony device.

While specific embodiments of the invention have been described and illustrated, such embodiments should be considered illustrative of the invention only and not as limiting the invention as construed in accordance with the accompanying claims.

## Claims

1. A method of remote notification comprising:
a) receiving an information signal at a first device;
b) determining a source of said information signal;
c) establishing communications between said first device and a second device; and
d) transmitting from said first device to said second device, a signal identifying said source of said information signal.

2. A method as claimed in claim **1** wherein establishing communications includes placing a telephone call from said first device to said second device.

3. A method as claimed in claim **1** wherein determining includes determining said source from said information signal itself.

4. A method as claimed in claim **3** wherein determining includes extracting calling line identification information from said information signal.

5. A method as claimed in claim **4** wherein transmitting includes transmitting said calling line identification information.

6. A method as claimed in claim **1** wherein placing a telephone call includes establishing communications when said source is a pre-specified source.

7. A method as claimed in claim **1** wherein placing a telephone call includes establishing communications when said source satisfies a pre-specified condition within a predefined time period.

8. A method as claimed in claim **7** wherein placing a telephone call includes establishing communications when said source satisfies a pre-specified condition.

9. A method as claimed in claim **7** wherein establishing communications includes placing said telephone call to a telephone number associated with said pre-specified condition.

10. A method as claimed in claim **9** further including associating telephone numbers with pre-specified conditions in response to user input received at said first device.

11. A method as claimed in claim **10** further including maintaining a list of telephone numbers associated with said pre-specified conditions.

12. A method as claimed in claim **1** wherein establishing communications includes dialling a telephone number associated with said second device.

13. A method as claimed in claim **1** wherein establishing communications includes establishing communications with a paging service provider.

14. A method as claimed in claim **13** further including transmitting a page message including an identification of said source.

15. A method as clairned in claim **1** further including annunciating at said second device an identification of said source.

16. A method as claimed in claim **15** wherein annunciating includes displaying said identification of said source.

17. An apparatus comprising:
a) a receiver for receiving an information signal;
b) a processor circuit for determining a source of said information signal; and
c) a transmitter for establishing communications with a second apparatus and for transmitting to said second apparatus, a signal identifying said source of said information signal.

18. An apparatus as claimed in claim **17** wherein said transmitter includes a telephony interface for placing a telephone call to said second apparatus.

19. An apparatus as claimed in claim **17** wherein said processor circuit is programmed to determine said source from said information signal itself.

20. An apparatus as claimed in claim **19** wherein said processor circuit is programmed to extract calling line identification information from said information signal.

21. An apparatus as claimed in claim **20** wherein said transmitter is operable to transmit said calling line identification information in said signal identifying said source.

22. An apparatus as claimed in claim **18** wherein said processor circuit is programmed to direct said telephony interface to establish communications when said source is a pre-specified source.

23. An apparatus as claimed in claim **22** wherein said processor circuit is programmed to direct said telephony interface to establish communications when said source is a pre-specified source within a predefined time period.

24. An apparatus as claimed in claim **18** wherein said processor circuit is programmed to direct said telephony interface to establish communications when said source satisfies a pre-specified condition.

25. An apparatus as claimed in claim **24** further including a list of telephone numbers associated with at least one pre-specified condition and wherein said processor circuit is programmed to direct said telephony interface to place a telephone call to a telephone number associated with said pre-specified condition satisfied by said source.

26. An apparatus as claimed in claim **25** further including a user input device and wherein said processing circuit is programmed to associate telephone numbers with pre-specified conditions, in response to user input received at said user input device.

27. An apparatus as claimed in claim **27** wherein said telephony interface includes a dialler for dialling a telephone number associated with said second apparatus.

28. An apparatus as claimed in claim **18** wherein said processing circuit is programmed to direct said telephony interface to place said telephone call to a paging service provider.

29. A system including the apparatus claimed in claim **28** and further comprising a paging service provider for transmitting a page message including an identification of said source.

30. A system including the apparatus as claimed in claim **17** and further including a second apparatus, said second apparatus having an annunciator for annunciating an identification of said source.

31. A system as claimed in claim **30** wherein said annunciator includes a display for displaying said identification of said source.

32. An apparatus comprising:
a) means for receiving an information signal;
b) means for determining a source of said information signal;
c) means for establishing communications with a second apparatus; and
d) means for transmitting to said second apparatus, a signal identifying said source of said information signal.
